Europäisches Patentamt

European Patent Office

Office européen des brevets

(11) Veröffentlichungsnummer: **0 470 293 A1**

## EUROPÄISCHE PATENTANMELDUNG

(21) Anmeldenummer: **90121287.8**

(22) Anmeldetag: **07.11.90**

(51) Int. Cl.5: **B65D 75/34**, B32B 1/06

(30) Priorität: **09.08.90 DE 9011626 U**

(43) Veröffentlichungstag der Anmeldung:
**12.02.92 Patentblatt 92/07**

(84) Benannte Vertragsstaaten:
**AT BE CH ES FR GB GR IT LI LU NL SE**

(71) Anmelder: **von Ende-Pichler, Gabriele**
**Von Büssing Strasse 45**
**W-8019 Glonn(DE)**

(72) Erfinder: **von Ende-Pichler, Gabriele**
**Von Büssing Strasse 45**
**W-8019 Glonn(DE)**

(74) Vertreter: **Rost, Jürgen et al**
**Patent- und Rechtsanwälte**
**Bardehle-Pagenberg-Dost-Altenburg**
**Frohwitter-Geissler & Partner Galileiplatz 1**
**W-8000 München 80(DE)**

(54) **Verbundkörper als Verpackungsmaterial.**

(57) Es wird ein Verbundkörper als Verpackungsmaterial für Geschenke vorgeschlagen, welcher aus einer unteren und einer oberen Schicht besteht, wobei die beiden Schichten an ihren zugewandten Flächen abwechselnd miteinander verbunden und nicht verbunden sind, und die Räume zwischen den nicht miteinander verbundenen Flächen Aufnahmestellen für Gegenstände sind.

Fig. 1

EP 0 470 293 A1

Die Erfindung bezieht sich auf Verbundkörper, insbesondere als Verpackungsmaterial für Geschenke.

Verpackungen werden sowohl für Industrieprodukte als auch in Privathaushalten gebraucht und angewendet. Dabei gibt es die unterschiedlichsten Verpackungsarten. So gibt es beispielsweise Kisten und Schachteln, in die zu verpackende Gegenstände einfach hineingelegt werden. Des weiteren ist beispielsweise die Vakuumverpackung für Kaffeepulver bekannt. Besonders in Privathaushalten gebräuchlich ist die Geschenkverpackung mit besonderem Geschenkpapier, die noch durch extra für derartige Verpackungen vorgesehene Bänder verschönt werden kann.

So vielseitig die Palette der Verpackungsarten auch ist, taucht doch immer dann ein Problem auf, wenn Klein- und Kleinstgegenstände verpackt werden müssen. Meistens werden sehr viele dieser Gegenstände in einer allzu großen Verpackung untergebracht. Besonders deutlich wird das beim Verpacken verschiedener Klein- bzw. Kleinstgegenstände. Wählt man nämlich in diesem Fall eine einzige große Verpackung für die verschiedenen Gegenstände, ist es relativ schwierig, einen Gegenstand in dem Gemisch von Klein- bzw. Kleinstgegenständen zu finden, um ihn aus der Verpackung nehmen zu können.

Der Erfindung liegt daher die Aufgabe zugrunde, einen Verpackungskörper zu schaffen, mit dem auch Klein- und Kleinstgegenstände verpackt werden können, ohne daß die voranstehend genannten Probleme auftauchen.

Diese Aufgabe wird erfindungsgemäß mit den im Anspruch 1 angegebenen Merkmalen gelöst.

Die erfindungsgemäße Ausgestaltung des Verpackungskörpers weist die Vorteile auf, daß kleine Gegenstände besser und für den Anwender bzw. einen Verbraucher effizienter verpackt werden können. Eine Verschwendung von Material ist ausgeschlossen, womit die Erfindung auch noch einen Beitrag zum Umweltschutz liefert.

Eine besonders vorteilhafte Verwendung findet der erfindungsgemäße Verbundkörper als Verpakkungsmaterial bei "kleinen Geschenken" unter Verwendung von integrierten Tierfiguren, Glitter, Schleifen, beschriebenem Papier, Abzeichen, Sternchen und dergleichen. Der Verbundkörper besteht dabei aus zwei Schichten, wobei bei einer vorteilhaften Ausgestaltung mindestens eine Schicht eine durchsichtige Folie ist, so daß die obigen integrierten Teile zu sehen sind. Das Prinzip, ein schönens Geschenk mit einem durchsichtigem Verpackungsmaterial zu verpacken hat sich auch schon beim Verpacken von Blumensträußen bewährt.

Für flächige Gegenstände reicht es aus, die beiden Schichten des Verbundkörpers an den Stellen zu verbinden, die das zwischen den Schichten vorgesehene Kleinmaterial umgeben; für dreidimensionale Gegenstände weist eine oder beide Schichten eine Ausbuchtung in der jeweils den Verbindungsflächen der beiden Schichten entgegengesetzten Richtung auf. Diese den dreidimensionalen Gegenstand enthaltenden Aufnahmestellen sind vorzugsweise kreisförmig, rechteckig oder quadratisch ausgebildet; im Falle der oben angesprochenen Ausbuchtungen sind diese je nach Bedarf einfach ausgebeult.

Der Verbundkörper aus zwei Schichten kann eine größere Anzahl von Aufnahmestellen aufweisen, die Reihe für Reihe aneinander grenzen. Diese Reihen können jeweils seitlich versetzt sein, sie können aber auch so angeordnet sein, daß die Aufnahmestellen spaltenmäßig untereinander vorhanden sind. Es ist jedoch bei in Flächenrichtung kreisförmigen Aufnahmestellen die seitliche Versetzung der Reihen vorzuziehen, die derart erfolgt, daß der Mittelpunkt einer Kleisform der einen Reihe genau zwischen zwei Mittelpunkten der folgenden Reihe liegt.

Die zwei Schichten des Verpackungskörpers sind teilweise voneinander getrennt. Sie sind aber auf jeden Fall auf einer umlaufenden Kante miteinander verbunden. Beim Herstellen des Verbundkörpers wird wie folgt vorgegangen: Zuerst wird eine seiner Schichten ausgebreitet, wonach die zu verpackenden Gegenstände in die bzw. an Position der Aufnahmestellen gelegt werden. Falls die Verbindung der zwei Schichten ein Klebeverbindung ist, muß jetzt ein Klebstoff auf die als Verbindungsstellen vorgesehenen Stellen des Verbundkörpers aufgetragen werden. Danach wird die zweite Schicht des Verbundkörpers über der ersten Schicht in Stellung gebracht und die beiden Schichten miteinander verbunden.

Die Erfindung wird anhand von Ausführungsbeispielen unter Bezugnahme auf die Zeichnung näher erläutert. Es zeigen:

Figur 1    einen seitlichen Querschnitt eines zweischichtigen Verbundkörpers, wobei keine Schicht eine Ausbuchtung aufweist;

Figur 2    einen seitlichen Querschnitt eines zweischichtigen Verbundkörpers, wobei die obere Schicht eine Ausbuchtung aufweist; und

Figur 3    eine Draufsicht eines Verbundkörpers, wobei die jeweils in einer Reihe liegenden Aufnahmestellen untereinander liegen.

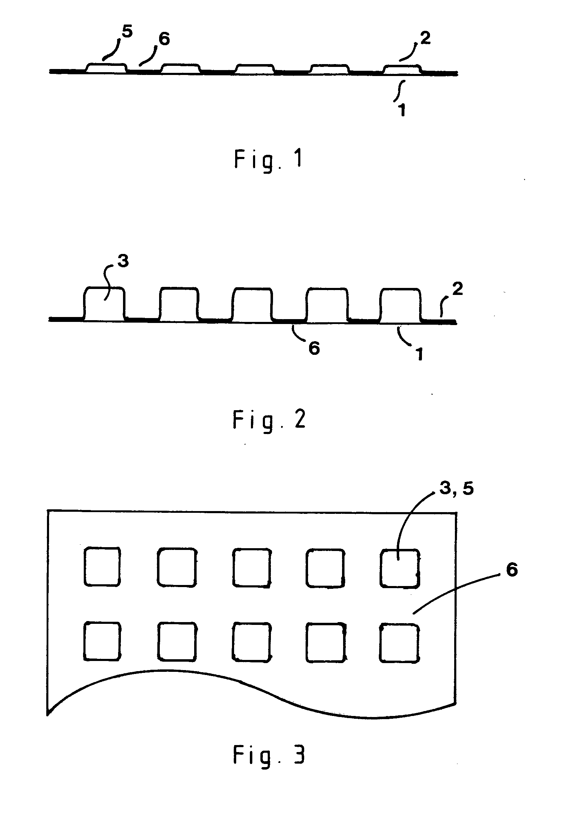

In Fig. 1 ist ein Verbundkörper aus einer unteren Schicht 1 und einer oberen Schicht 2 gezeigt. In dem Verbundkörper nach Fig. 1 sind flächige Gegenstände vorhanden, was aus der flachen Ausgestaltung von Aufnahmestellen 5 hervorgeht. Zwischen den Aufnahmestellen 5 liegen Verbindungsstellen 6.

Demgegenüber ist in Fig. 2 ein Verbundkörper mit einer unteren Schicht und einer oberen Schicht gezeigt, wobei die obere Schicht als Aufnahmestellen Ausbuchtungen 3 aufweist. Das bedeutet, daß der Verbundkörper nach der Fig. 2 dreidimensionale Gegenstände aufnimmt. Zwischen den Ausbuchtungen 3 sind analog Fig. 1 Verbindungsstellen 6 vorgesehen.

In Fig. 3 ist eine "geordnete" Anordnung von Aufnahmestellen gezeigt. Die Ordnung besteht darin, daß jeweils drei Aufnahmestellen, die sich beliebig wiederholen, einen rechten Winkel bilden. Diese Anordnung ist besonders dann vorteilhaft, wenn die Ausbuchtungen in Draufsicht nicht kreisförmig sind.

Selbstverständlich können die Aufnahmestellen und die Ausbuchtungen in Draufsicht die Forin eines Kreises, Trapezes, Rechteckes, Quadrates und dergl. aufweisen. Die in den Aufnahmestellen enthaltenen Gegenstände können beispielsweise kleine Tierchen, Glitter, Abzeichen, Symbole auch in Flächenform sein.

## Patentansprüche

1. Verbundkörper, insbesondere als Verpakkungsmaterial für Geschenke, dadurch **gekennzeichnet**, daß er aus einer unteren (1) und einer oberen (2) Schicht besteht, wobei die beiden Schichten an ihren zugewandten Flächen abwechselnd miteinander verbunden und nicht verbunden sind, und daß die Räume zwischen den nicht miteinander verbundenen Flächen Aufnahmestellen (5) für Gegenstände sind.

2. Verbundkörper nach Anspruch 1. dadurch gekennzeichnet. daß mindestens eine Schicht (1, 2) eine Folie ist, welche transparent ist.

3. Verbundkörper nach Anspruch 1 oder 2, dadurch gekennzeichnet, daß die Aufnahmestellen (5) zur Aufnahme eine flächigen Gegenstandes flach ausgebildet sind (Fig 1).

4. Verbundkörper nach Anspruch 1 oder 2, dadurch gekennzeichnet, daß am Ort der Aufnahmestelle für einen dreidimensionalen Gegenstand mindestens eine Schicht eine Ausbuchtung (3) in Richtung der nicht mit der jeweils anderen Fläche in Kontakt stehenden Fläche aufweist (Fig. 2).

5. Verbundkörper nach einem der vorangehenden Ansprüche, dadurch gekennzeichnet, daß die Aufnahmestellen (5) gegeneinander versetzt angeordnet sind.

6. Verbundkörper nach einem der Ansprüche 1 bis 4, dadurch gekennzeichnet, daß jeweils drei Aufnahmestellen (5) in einem rechten Winkel zueinander angeordnet sind.

7. Verbundkörper nach einem der vorangehenden Ansprüche, dadurch gekennzeichnet, daß die Verbindung der unteren (1) und der oberen (2) Schicht eine Klebe-, Schweiß- oder Heftverbindung ist.

8. Verbundkörper nach einem der vorangehenden Ansprüche, dadurch gekennzeichnet, daß die untere (1) und die obere (2) Schicht an ihrem Außenrand miteinander verbunden sind.

Fig. 1

Fig. 2

Fig. 3

Europäisches
Patentamt

EUROPÄISCHER
RECHERCHENBERICHT

Nummer der Anmeldung

EP 90 12 1287

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | EP-A-0 259 574   (VARTA BATTERIE AG) <br> * Zusammenfassung; Spalte 2, Zeile 45 - Spalte 4, Zeile 37; Ansprüche 1,3 * | 1,2,4-8 | B 65 D 75/34 <br> B 32 B 1/06 |
| A | | 3 | |
| | _ _ _ _ _ | | |

RECHERCHIERTE
SACHGEBIETE (Int. Cl.5)

B 65 D

Der vorliegende Recherchenbericht wurde für alle Patentansprüche erstellt

| Recherchenort | Abschlußdatum der Recherche | Prüfer |
|---|---|---|
| Den Haag | 28 Oktober 91 | DERZ T. |